# EUROPÄISCHE PATENTSCHRIFT

(11) **EP 1 725 588 B1**
(45) Veröffentlichungstag und Bekanntmachung des Hinweises auf die Patenterteilung: **09.01.2008**
(21) Anmeldenummer: 04820379.8
(22) Anmeldetag: 17.12.2004
(51) Int. Cl.: C08B 30/12, C08B 30/14, A23L 1/29, A23L 1/0522, A21D 15/04, A23L 1/10

(54) **LANGSAM VERDAULICHES STÄRKEPRODUKT**
SLOWLY DIGESTIBLE STARCH PRODUCT
PRODUIT AMYLAC DIGESTIBILIT LENTE

(30) Priorität: 18.12.2003 DE 10359918
(43) Veröffentlichungstag der Anmeldung: 29.11.2006
(73) Patentinhaber: InnoGEL AG, 6331 Hünenberg (CH)
(72) Erfinder: MÜLLER, Rolf, CH-8055 Zürich (CH); INNEREBNER, Frederico, CH-8049 Zürich (CH)
(74) Vertreter: Frommhold, Joachim
(86) Internationale Anmeldenummer: PCT/CH2004/000743
(87) Internationale Veröffentlichungsnummer: WO 2005/058973

(56) Entgegenhaltungen:
- EP-A- 1 362 517
- WO-A-03/035026
- WO-A-20/04023890
- GARCIA-ALONSO A ET AL: "EFFECT OF PROCESSING ON POTATO STARCH: IN VITRO AVAILABILITY AND GLYCAEMIC INDEX" STARCH STARKE, WILEY-VCH VERLAG, WEINHEIM, DE, Bd. 52, Nr. 2/3, März 2000 (2000-03), Seiten 81-84, XP000924207 ISSN: 0038-9056
- A. AKERBERG, H. LILJEBERG, I. BJÖRCK: "Efects of Amylose/Amylopectin atio and Baking Conditions on Resistant Starch Formation and Glycaemic Indices" JOURNAL OF CEREAL SCIENCE, Bd. 28, 1998, Seiten 71-80, XP002319055
- LIM S-T ET AL: "Thermal transition characteristics of heat-moisture treated corn and potato starches" CARBOHYDRATE POLYMERS, APPLIED SCIENCE PUBLISHERS, LTD. BARKING, GB, Bd. 46, Nr. 2, Oktober 2001 (2001-10), Seiten 107-115, XP004250445 ISSN: 0144-8617

## Beschreibung

Die Erfindung betrifft ein Stärkeprodukt in Form eines Lebensmittelingredienz sowie eines Lebensmittels per se, dessen Hydrolysegeschwindigkeit während der Verdauung zu tiefen Werten hin eingestellt werden kann und insbesondere auch nahezu konstant eingestellt werden kann, indem die Stärke ausgehend von einem mindestens teilweise amorphen Zustand mittels einer gezielten Konditionierung als ein teilkristallines Netzwerk mit geringem Quellgrad erhalten wird.

Bei der Herstellung von stärkehaltigen Lebensmitteln wird die Stärke in den meisten Fällen soweit aufbereitet, dass sie ausgesprochen schnell verdaut und dabei in Glucose umgewandelt wird. Dies führt zu einem zu schnellen Anstieg des Blutzuckerspiegels (Überzuckerung) gefolgt von einem baldigen zu starken Abfall des Blutzuckerspiegels (Unterzuckerung). Solche Lebensmittel weisen einen hohen Glyzemischen Index (Gl) auf. Eine grosse Zahl von neueren Studien weist darauf hin, dass Lebensmittel mit hohem hohen GI eine wichtige Ursache von Diabetes, Fettsucht und Herz-Kreislauf Krankheiten sind. Die WHO erachtet die Angabe von GI Werten auf Lebensmittelverpackungen als sinnvolle Prävention der genannten Krankheiten. Es besteht daher ein Bedarf an stärkehaltigen Lebensmitteln, die einen reduzierten GI aufweisen, d.h. langsam verdaut werden. In diesem Kontext stellt ein Lebensmittel mit zeitlich konstanter Hydrolyse, wobei pro Zeiteinheit genau die Menge an Glucose freigesetzt wird, die vom Stoffwechsel verbraucht wird, den Idealfall dar. Insbesondere für Diabetiker ist ein solches Lebensmittel in höchstem Masse wünschbar. Als gegenwärtig beste Lösung hierzu wird für Diabetiker ungekochte, d.h. native Maisstärke (uncooked corn starch) eingesetzt (WO 95/24906), die relativ langsam verdaut wird. Allerdings ist einerseits die Einnahme von nativer Maisstärke in Form von wässrigen Slurrys unattraktiv und andererseits ist dabei nur eine limitierte zeitlich konstante Glucose Freisetzung zu erhalten. Eine Verbesserung hierzu wird in US 6815433 vorgeschlagen, wobei native Maisstärke mittels Bindemitteln zu Agglomeraten granuliert wird, um die Hydrolysegeschwindigkeit weiter zu reduzieren und möglichst konstant zu erhalten. Ein Nachteil der Lösungen auf Basis von nativer Maisstärke ist deren begrenzte Temperaturstabilität.

Andere Formen von langsam verdaulichen Stärken sind die Resistenten Stärken (z.B. High Mais, Novelose, Actistar, Crystalean). Diese Stärken weisen einen hohen kristallinen Anteil auf und sind im Dünndarm zu etwa 50% verdaubar. Der Rest wird im Dickdarm fermentiert. Der im Dünndarm verdaubare Anteil wird überwiegend sehr schnell verdaut, weshalb Resistente Stärken als Lebensmittelzusatz zur Reduktion des GI nur beschränkt sinnvoll sind.

Weitere langsam verdauliche Stärken werden in WO 2004/066955 A2 beschrieben. Diese Stärken werden erhalten, indem eine Suspension von rund 5% Stärke in Wasser gelatinisiert und mit alpha Amylase behandelt wird. Danach wird die Stärke ausgefällt, wobei sie mit hohem kristallinem Anteil erhalten werden kann. Entsprechend der Offenbarung weisen diese Stärken ein Verdauungsverhalten auf, das zwischen Resistenten Stärken und unbehandelter nativer Stärke liegt.

Weitere langsam verdauliche Stärken werden in US 2003/0219520 A1 und US 2003/0215562 A1 beschrieben. Dabei werden Stärken mit tiefem Amylose Gehalt bez. mit höherem Amylosegehalt ebenfalls gelatinisiert und bei Wassergehalten von oberhalb 70% mit entzweigenden Enzymen (Isoamylase, Pullulanase) zu mindestens 90% entzweigt. Anschliessend werden die Stärken ausgefällt und mit hohem kristallinem Anteil erhalten, wodurch die Verdauungsgeschwindigkeit herabgesetzt wird. Das Verdauungsverhalten dieser Stärken liegt ebenfalls zwischen Resistenten Stärken und unbehandelten nativen Stärken.

Die Lösungen entsprechend den genannten Patentanmeldungen weisen den Nachteil von aufwändigen und langwierigen mehrstufigen Verfahren auf (Gelatinisierung, Enzym-Reaktion, wobei bei der Entzweigung werden mehr als 10 Stunden benötigt werden, Fällung, Zentrifugieren, Reinigen, Sprühtrocknen). Ausserdem zeigen die Fällungsprodukte infolge der hohen Kristallinität ein Verdauungsverhalten, das dem von Resistenter Stärke ähnlich ist, auch wenn insgesamt ein grösserer Anteil im Dünndarm verdaut werden kann. Ein Anteil von rund 50% wird sehr schnell verdaut, ähnlich wie Weissbrot, das einen sehr hohen GI aufweist und nur etwa 20 - 30% wird langsam verdaut. Der Rest wird im Dickdarm fermentiert. Da diese Lösungen als Lebensmittelzusatz eingesetzt werden sollten, kann damit nur ein Teil der Stärke substituiert werden und ist selbst beim Einsatz von hohen Anteilen die erreichbare Reduktion des GI beschränkt.

Die vorliegende Erfindung stellt sich daher die Aufgabe, mittels eines einfachen Verfahrens ein langsam verdauliches Stärkeprodukt bereitzustellen, wobei ein breiter Bereich von Hydrolysecharakteristiken, insbesondere tiefe Hydrolysegeschwindigkeiten und über einen möglichst langen Zeitraum konstante Hydrolysegeschwindigkeiten erhalten werden kann und wobei die Temperaturstabilität für die thermische Beanspruchung in wässrigen Medien bei der Lebensmittelzubereitung ausreichend ist.

Die Erfindung betrifft ein homogenes, langsam verdauliches Stärkeprodukt dessen Hydrolysegeschwindigkeit mit Massnahmen betreffend Rezeptur und Verfahren in weiten Bereichen eingestellt werden kann. Insbesondere wurde überraschenderweise gefunden, dass das Stärkeprodukt mit geringer und gegebenenfalls konstanter Hydrolysegeschwindigkeit erhalten werden kann, womit eine lang anhaltende konstante Glucose Freisetzung ermöglicht wird. Hiermit kann der Blutzuckerspiegel günstig beeinflusst werden, sowohl eine Überzuckerung als auch eine Unterzuckerung wird vermieden und eine lang anhaltende Energiezufuhr in Form von Glucose kann ermöglicht werden.

Diese vorteilhaften Eigenschaften des Stärkeprodukts werden erhalten, indem die Stärke des Stärkeprodukts in einem ersten Schritt mindestens teilweise gelatinisiert oder mindestens teilweise plastifiziert wird. Bei der Gelatinisierung wird dabei die teilkristalline Struktur des Stärkekorns in eine amorphe Struktur umgewandelt, wobei das Korn als Entität erhalten bleibt während bei der Plastifizierung auch das Korn verschwindet. Anschliessend wird eine Konditionierung durchgeführt, wobei eine Rekristallisation und Ausbildung eines Netzwerks bzw. Gels stattfindet. Dabei wird wiederum eine teilkristalline Struktur aufgebaut, die jedoch im Unterschied zur teilkristallinen Struktur von nativer Stärke gezielt bezüglich der relevanten Parameter eingestellt werden kann und eine höhere Temperaturstabilität aufweist. Es wurde gefunden, dass mit dem Ausmass der Netzwerkbildung, d.h. mit zunehmender Netzwerkdichte der Grad der Hemmung der Amylasen und damit der Grad der Reduktion der Hydrolysierungsgeschwindigkeit zunimmt. Es wurde gefunden, dass besonders vorteilhafte Strukturen durch Einsatz von kurzkettiger Amylose (Short Chain Amylose, SCA) erhalten werden, wobei auch die Bildungsgeschwindigkeit dieser Strukturen massiv beschleunigt werden kann. Infolge des ausgebildeten Netzwerks weist das Stärkeprodukt eine beschränkte Quellbarkeit auf, wodurch der Zutritt der hydrolysierenden Amylasen während der Verdauung eingeschränkt wird. Hieraus resultiert eine gegenüber dem amorphen Zustand, der eine sehr schnelle Hydrolysierung zur Folge hat, massiv reduzierte Verdauungsgeschwindigkeit. Die Kristallite, welche die Verknüpfungspunkte des Netzwerks bilden, sind langsam verdaulich bis unverdaulich. Der im Dünndarm unverdauliche Anteil liegt dabei in Form von Resistenter Stärke (RS) vor. Der verdauliche Anteil der Kristallite und die amorphe Phase mit eingeschränkter Quellbarkeit liegen in Form von vorteilhafter, langsam verdaulicher Stärke vor, die den Hauptanteil des Stärkeprodukts ausmacht. Das Verhältnis von langsam verdaulicher Stärke zu RS kann durch die Parameter des Netzwerks eingestellt werden, insbesondere kann auch ein sehr hoher Anteil an langsam verdaulicher Stärke bei geringem Anteil an RS erhalten werden und kann das Stärkeprodukt ohne einen Anteil an schnell verdaulicher Stärke erhalten werden. Insgesamt können somit an sich beliebige Hydrolysegeschwindigkeiten zwischen der sehr schnellen und unvorteilhaften Hydrolyse von amorpher Stärke, wie dies bei den meisten aufbereiteten Stär keprodukten der Fall ist, und mit minimaler Hydrolysegeschwindigkeit eingestellt werden.

Der Unterschied gegenüber WO 2004/066955 A2, US 2003/0219520 A1 und US 2003/0215562 A1 besteht primär darin, dass die Hydrolysecharakteristik mittels der Parameter des Netzwerks mit eingeschränktem Quellgrad eingestellt wird, wofür ein geringer kristalliner Anteil in Form von das Netzwerk knüpfenden Kristalliten notwendig ist (rund 1 - 50%), während beim Stand der Technik die Kristallite (rund 40 - 70%) nach der Fällung hauptsächlich nicht miteinander verknüpft sind und die Charakteristik der Hydrolyse durch den unterschiedlichen Grad der Perfektion der Kristallite (langsam verdaulicher Anteil) und von einem Anteil frei zugänglicher amorpher Stärke (schnell verdaulicher Anteil) bestimmt wird.

Das Stärkeprodukt kann zum Beispiel als Pulver vorliegen und in dieser Form im Sinne eines Lebensmittezusatzes eingesetzt werden, um die insgesamte Hydrolysegeschwindigkeit, bzw. den glyzemischen Index herabzusetzen (Vermeiden von Überzuckerung) und eine anhaltende Glucose Versorgung zu gewährleisten (Vermeiden von Unterzuckerung). Andererseits kann das Stärkeprodukt bsw. auch als Tablette eingenommen werden oder etwa als Lebensmittel per se, bsw. als Snack konsumiert werden.

### Basisstärke

Zur Herstellung des langsam verdaulichen Stärkeprodukts kann von irgendeiner Stärke (Basisstärke) oder von Mischungen von Stärken ausgegangen werden wie bsw. Mais-, Weizen-, Kartoffel-, Tapioka-, Reis-, Sago-, Erbsenstärke usw. Unter Stärke werden hier sowohl Stärke im engeren Sinne, als auch Mehle und Griese verstanden. Die Stärke kann chemisch, enzymatisch, physikalisch oder gentechnisch verändert sein. Der Amylosegehalt der Stärke kann von 0 (Waxy Stärken) bis nahezu 100% (hochamylosehaltige Stärken) betragen. Bevorzugt sind Stärken mit guten Kristallisationseigenschaften. Dies sind bsw. Stärken, deren Amylopektin A-Seitenketten eine Kettenlänge > 10, vorzugsweise > 12, am bevorzugtesten > 14 aufweisen, und/oder Stärken, deren Amylosegehalt > 20, vorzugsweise > 30, am bevorzugtesten > 50 beträgt und/oder Stärken, die verändert wurden, um verbesserte Kristallisationseigenschaften zu erhalten wie bsw. mit säure- und/oder enzymatisch hydrolysierte Stärken wie dünnkochende Stärken oder teilweise entzweigte Stärken. Die Stärken können im nicht-gelatinisierten Zustand, teilweise bis vollständig gelatinisiert oder teilweise bis vollständig plastifiziert eingesetzt werden.

### Kurzkettige Amylose (SCA)

Eingeselzt wird kurzkettige Amylose (Short Chain Amylose, SCA) mit einem Polymerisationsgrad von < 100, noch bevorzugter < 70, am bevorzugtesten < 50. SCA kann zum Beispiel aus Amylose mittels Einsatz von Amylasen oder aus Amylopektin mittels Einsatz von entzweigenden Enzymen wie Isoamylase oder Pullulanase erhalten werden. Durch den Einsatz von SCA können besonders vorteilhafte langsam verdauliche Stärkeprodukte erhalten werden und insbesondere kann die Ausbildung von vorteilhaften Netzwerken deutlich beschleunigt werden, wodurch das Verfahren vereinfacht und kostengünstiger erfolgen kann. Ausserdem wird die Thermostabilität erhöht. Die SCA wirkt dabei in dem Sinne, dass sie einerseits Kristallinität der Basisstärke induziert, indem Mischkristallite gebildet werden und sie andererseits die Netzwerkdichte erhöht, wodurch die Quellbarkeit und damit die Hydrolysegeschwindigkeit reduziert wird. Damit diese Vorteile erhalten werden, ist eine möglichst molekulardisperse Mischung der Basisstärke mit der SCA ausschlaggebend. Dies wird erreicht, indem die SCA bsw. in Form einer Lösung mit der mindestens teilweise gelatinisierten Basisstärke gemischt wird oder indem die SCA im amorphen Zustand, bsw. in sprühgetrockneter Form, zugemischt wird oder indem die SCA in teilkristalliner Form zugemischt wird und nachfolgend bei der Aufbereitung der Basisstärke aufgeschlossen wird oder indem die SCA bei der Aufbereitung der Basisstärke durch Einsatz von entzweigenden Enzymen direkt aus der Basisstärke erhalten wird. Ähnliche Vorteile werden erhalten, wenn die Basisstärke mit weiteren Amylasen wie alpha Amylase behandelt wird. Dadurch wird das Molekulargewicht reduziert und die Kristallisierbarkeit verbessert. Ausserdem können beim Einsatz von SCA Netzwerke auch bei Bedingungen erhalten werden, wobei ohne SCA keine Netzwerke entstehen würden, bsw. bei tiefen Wassergehalten und tiefen Temperaturen, wo die Basisstärke in einem amorphen, quasi eingefrorenen Zustand vorliegt. Vorteilhafte Anteile an SCA bezogen auf die gesamte Stärke in Gew.% liegen im Bereich 1 - 95, vorzugsweise 2 - 70, noch bevorzugter 3 - 60, am bevorzugtesten 4 - 50.

### Verfahrensbedingungen

Zur Herstellung von langsam verdaulichem Stärkeprodukt wird in einem ersten Schritt die Basisstärke auf einen mindestens teilweise gelatinisierten oder mindestens teilweise plastifizierten Zustand eingestellt. Von Vorteil ist, wenn in diesem Zustand SCA möglichst molekulardispers in der Basisstärke verteilt vorliegt. Dies wird durch bekannte Koch- und Mischverfahren erreicht. Besonders vorteilhaft ist die Aufbereitung mittels Extrusion.

Der Wassergehalt in Gew.% während der Aufbereitung liegt im Bereich 10 - 90, vorzugsweise 14 - 70, noch bevorzugter 16 - 60, am bevorzugtesten 18 - 50. Die Massentemperatur in °C während der Aufbereitung liegt im Bereich -10 - 250, vorzugsweise 20 - 220, noch bevorzugter 50 - 200. Je tiefer der Wassergehalt ist, bei umso höheren Temperaturen findet die Aufbereitung statt.

Aus dem aufbereiteten Zustand, wobei die Stärke mindestens teilweise im amorphen Zustand vorliegt, wird durch eine Konditionierung die Netzwerkbildung ausgelöst und somit die Stärke in eine langsam verdauliche Form überführt. Dabei sind die Parameter der Konditionierung wichtig für die Ermöglichung der Bildung von vorteilhaften Netzwerken und für das Ausmass der Reduktion der Hydrolysegeschwindigkeit. Die wesentlichen Parameter der Konditionierung sind Wassergehalt Wo, Temperatur Tk und Zeit tk. Diese Parameter sind abhängig von der Rezeptur (Art der Basisstärke, gegebenenfalls ein Anteil an SCA). Es wurde gefunden, dass bezüglich der vorteilhaften Parameter in etwa folgende Bedingungen allgemein gelten:

Der Wassergehalt Wo in Gew.% während der Konditionierung liegt im Bereich 10 - 90, vorzugsweise 14 - 70, noch bevorzugter 16 - 60, am bevorzugtesten 18 - 50. Mit abnehmendem Wassergehalt werden engmaschigere Netzwerke, gekennzeichnet durch einen tiefen Quellgrad Q, erhalten, die für die Reduktion der Hydrolysegeschwindigkeit vorteilhaft sind. Weiter sind tiefere Wassergehalte vorteilhaft, weil das Endprodukt meist einen Wassergehalt < 30% aufweist und daher weniger Prozesswasser wieder entfernt werden muss.

In Bezug auf eine Referenz Temperatur To liegt die Differenz Tk - To in °C im Bereich 20 - 150, vorzugsweise 35 - 135, noch bevorzugter 50 - 120, am bevorzugtesten 70 - 100, wobei zwischen To und Wo folgender Zusammenhang gilt:

**Tabelle 1**

| | | | | | | | | | | | | | | | | |
|---|---|---|---|---|---|---|---|---|---|---|---|---|---|---|---|---|
| **Wo** | [%] | 10 | 15 | 20 | 25 | 30 | 35 | 40 | 45 | 50 | 55 | 60 | 65 | 70 | 80 | 90 |
| **To** | [°C] | 98 | 55 | 23 | -3 | -27 | -41 | -55 | -67 | -78 | -87 | -95 | -102 | -108 | -119 | -128 |

Für Wassergehalte Wo zwischen den angegebenen Werten gelten interpolierte Werte für To. Liegen die unteren Grenzen von Tk entsprechend der vorteilhaften Temperaturintervalle bei Temperaturen << 0°C, so gilt als untere Grenze für Tk die Temperatur knapp über dem Gefrierpunkt der Stärke-Wasser Mischung (ca. - 10°C). Mit abnehmendem Wassergehalt Wo werden vorteilhaft höhere Temperaturen Tk eingesetzt.

Die Konditionierungszeit tw in h liegt im Bereich 0 - 24, vorzugsweise 0.1 - 12, noch bevorzugter 0.25 - 6, am bevorzugtesten 0.5 - 3. Eine Konditionierungszeit von 0h bedeutet hier, dass dann keine spezielle Konditionierung durchgeführt wird und das Stärkeprodukt direkt nach der Aufbereitung getrocknet wird. Allerdings kann unter vorteilhaften Bedingungen selbst bei schneller Trocknung noch eine Konditionierung stattfinden, die insbesondere beim Einsatz von SCA ausreichen kann, um eine tiefe Hydrolysegeschwindigkeit Ho zu erhalten. Es sind selbstverständlich auch Konditionierungszeiten > 24h anwendbar, die angegebenen vorteilhaften Bereiche beziehen sich auf wirtschaftlich optimierte Verfahren, wobei möglichst kurze Prozesszeiten vorteilhaft sind.

Beim Einsatz von SCA kommen vorteilhaft eher die höheren Temperaturen Tk, die tieferen Wassergehalte Wo und die kürzeren Zeiten tk zur Anwendung, während ohne Einsatz von SCA die Verhältnisse umgekehrt sind. Die Parameter der Konditionierung Wo und Tk können auch einen zeitlichen Verlauf aufweisen und dies ist insbesondere vorteilhaft, wenn die Konditionierung mit einem Trocknungsvorgang kombiniert wird, womit das Verfahren vereinfacht und wirtschaftlich optimiert werden kann.

Die Auswahl der geeigneten Konditionierungsparameter ist wichtig, um grosse Effekte, d.h. ausgeprägte Reduktionen der Hydrolysegeschwindigkeit Ho in möglichst kurzer Zeit zu erhalten. So kann bsw. beim Einsatz von SCA im Wassergehaltsbereich von etwa 20 - 35% durch eine Konditionierung bei 50°C während einer halben Stunde dieselbe Reduktion der Hydrolysegeschwindigkeit Ho erreicht werden, wie sie für Rezepturen ohne SCA im Wassergehaltsbereich von etwa 30 - 50% durch eine Konditionierung bei 25°C während 24h resultiert. Hohe Thermostabilität wird bei hohem Anteil an Amylose und/oder bei Konditionierungen erhalten, die bei hohen Temperaturen durchgeführt werden.

### Trocknung

Im Anschluss an die Konditionierung wird gegebenenfalls eine Trocknung durchgeführt, wobei der Wassergehalt in Gew.% auf < 30, vorzugsweise < 20, am bevorzugtesten < 15 reduziert wird. Hierzu können bekannte Trocknungsverfahren eingesetzt werden, wie sie z.B. bei der Trocknung von Teigwaren oder Cerealien eingesetzt werden. Vorteilhaft ist die Trocknung bei Temperaturen in °C im Bereich 0 - 300, vorzugsweise 20 - 250, am bevorzugtesten 40 - 200. Von Vorteil ist weiter eine Trocknung mit Trocknungsgeschwindigkeiten in Gew.% Wasser/h im Bereich 0.1 - 500, vorzugsweise 1 - 100, noch bevorzugter 3 - 50, am bevorzugtesten 5 - 25. Wird die Trocknung eingeleitet, wenn durch die Konditionierung bereits ein ausreichendes Netzwerk eingestellt ist, kommen die hohen Trocknungsgeschwindigkeiten zum Einsatz, soll mindestens ein Teil des Netzwerks während der Trocknung entstehen, kommen die tieferen Trocknungsgeschwindigkeiten zum Einsatz. Die Einstellung der geeigneten Trocknungsgeschwindigkeit ist insbesondere relevant bis hinunter zu dem Wassergehalt, wo eine Netzwerkbildung noch möglich ist. Bei tiefem Wassergehalten können dann auch höchste Trocknungsgeschwindigkeiten zum Einsatz kommen.

Durch die Wahl der geeigneten Trocknungsparameter kann eine Trocknung mit der Konditionierung kombiniert werden, sodass eine separate Konditionierung sich erübrigt. Dies ist einerseits aus verfahrenstechnischen Gründen vorteilhaft, andererseits läuft die Bildung des Netzwerks, wodurch die reduzierte Verdauungsgeschwindigkeit erhalten wird, bei höheren Temperaturen sehr viel schneller ab als bei tiefen Temperaturen, sodass auch daher der Prozess vereinfacht und beschleunigt werden kann.

### Weiterverarbeitung

Um das Stärkeprodukt in Form eines Lebensmittelzusatzstoffes zu erhalten, womit der GI des Lebensmittels reduziert werden kann, wird das Stärkeprodukt direkt granuliert oder auf eine Partikelgrösse in mm im Bereich 0.001 - 5, vorzugsweise 0.01 - 1, am bevorzugtesten 0.05 - 0.5 zerkleinert, wozu verschiedene bekannte Zerkleinerungsverfahren wie bsw. Mühlen benutzt werden können. Die Zerkleinerung oder eine Vorzerkleinerung kann jedoch auch vor der Konditionierung und/oder Trocknung erfolgen, zum Beispiel mittels Heissabschlag nach der Extrusion.

Anstelle der Zerkleinerung kann vor oder nach der Konditionierung eine Formgebung erfolgen, wobei eine Form eingestellt wird, die für den Konsum als eigenständiges Lebensmittel geeignet ist, z.B. in Form von Cerealien oder Snacks. Dazu werden die entsprechenden Rohstoffe für die Herstellung des langsam verdaulichen Stärkeprodukts eingesetzt, z.B. Mais- oder Weizenmehl, Zucker, Salz, Malz et. für die Herstellung von Flakes oder Kartoffelgranulat und Kartoffel Flakes et. für die Herstellung von Kartoffelsnacks.

### Zusatzstoffe

Dem langsam verdaulichen Stärkeprodukt können auch diverse typische Lebensmittelzusatzstoffe zugemischt werden wie bsw. Aroma- und Farbstoffe, Emulgatoren, Proteine, low Calorie Süssstoffe und langsam verdauliche Süssstoffe und Kohlehydrate wie bsw. Xylitol, Sorbitol, Glycerin, Erytritol, Polydextrose Isomalt, Maltitol, Lactitol, Lactose, Trehalose, Fructose, Fasern, insbesondere lösliche Fasern wie beta-Glucan. Durch einen Anteil an löslichen Fasern ist eine zusätzliche synergistische Reduktion der Hydrolysegeschwindigkeit möglich, da die hohe Viskosität von löslichen Fasern den Zutritt und die Beweglichkeit von hydrolysierenden Enzymen zusätzlich erschwert.

### Eigenschaften

Die anfängliche in vitro Hydrolysegeschwindigkeit Ho steht in direktem Zusammenhang mit dem GI (vergl. Fig. 6), ist aber sehr viel einfacher und genauer bestimmbar, weshalb hier diese Grösse zur Charakterisierung des Verdauungsverhaltens benutzt wird. Zur Problematik von aus in vivo Versuchen erhaltenen GI Werten wird auf Am J Clin Nutr 2002; 76:5-56 (International table of glycemic index and glycemic load values: 2002, Seite 6: Why do GI values for he same types of foods sometimes vary) verwiesen.

Das langsam verdauliche Stärkeprodukt weist eine anfängliche Hydrolysegeschwindigkeit Ho in %/h von < 300%/h, vorzugsweise < 200, noch bevorzugter < 150, am bevorzugtesten < 100 auf. Der Wert von 300%/h entspricht dabei einem Gl-Wert von rund 50 (Glucose Standard). Selbstverständlich können auch höhere Werte für Ho eingestellt werden, doch sind entsprechende Stärkeprodukte für die Reduktion des GI von geringem Interesse. Der Wert von 220%/h entspricht der anfänglichen Hydrolysegeschwindigkeit von Roggenschrotbrot bzw. Pumpernickel (GI = ca. 43), Baguette weiss weist mit Ho = 1000%/h (GI = ca. 95) eine.sehr viel höheren Wert auf, während Vollkornbrot mit Ho = 530%/h (GI = ca. 55 - 60) zwischen Baguette und Pumpernickel liegt. Bezüglich sehr langsam verdaulicher Stärke, die auch für Diabetes Patienten eingesetzt wird, galt native Maisstärke mit Ho = 64%/h bisher als Massstab. Allerdings sind noch langsamere Hydrolysegeschwindigkeiten erwünscht und auch dies kann mit dem erfindungsgemässen Stärkeprodukt erreicht werden, wobei Werte Ho bis hinunter zu 15%/h erhalten werden.

Vorteilhaft ist, wenn ein möglichst grosser Anteil des Stärkeprodukts in langsam verdaulicher Form erhalten wird, d.h. mit einer Hydrolysegeschwindigkeit < 300%/h hydrolysiert wird. Der Anteil in Gew.% des langsam verdaulichem Stärkeprodukt, der langsam verdaut wird (SD, slowly digestible) liegt bei > 20, vorzugsweise > 30, noch bevorzugter > 45, am bevorzugtesten > 60.

Gegebenenfalls weist das Stärkeprodukt während einer Zeit tc in h von > 0.25, vorzugsweise > 0.5 noch bevorzugter > 0.75, am bevorzugtesten > 1 eine konstante oder nahezu konstante Hydrolysegeschwindigkeit Hc auf. Die Phase der konstanten Hydrolysegeschwindigkeit kann bei Beginn der Hydrolyse und/oder in einer auf den Beginn folgenden Phase der Hydrolyse stattfinden. Vorteilhaft ist eine konstante Hydrolysegeschwindigkeit Hc in %/h von < 300, vorzugsweise < 200, noch bevorzugter < 150, am bevorzugtesten < 100. Eine konstante Hydrolysegeschwindigkeit entspricht einer zeitlich konstanten Glucose Freisetzung und dies ist optimal, um den Blutzuckerspiegel konstant auf einem gewünschten Niveau zu halten. Native Maisstärke mit Ho = 64%/h und tc = 0.6h (in vitro Werte) ermöglicht eine Regulierung des Blutzuckerspiegels während etwa 4h (in vivo). Das erfindungsgemässe Stärkeprodukt hingegen ermöglicht z.B. mit Ho = 16%/h und tc = 3.5h (in vitro) eine um das mehrfache längere Phase der Regulierung des Blutzuckerspiegels von rund 24h (in vivo). Insbesondere kann dadurch eine Unterzuckerung von Diabetes Patienten während der Nacht vermieden werden, wozu die native Maisstärke nicht ausreicht.

Der Quellgrad Q in Wasser bei Raumtemperatur des Stärkeprodukts liegt im Bereich 1.1 - 4, vorzugsweise 1.15 - 3, noch bevorzugter 1.17 - 2.5, am bevorzugtesten 1.2 - 2. Mit abnehmendem Quellgrad wird die Hydrolyse verzögert, da der Zutritt der Amylasen zunehmend erschwert wird.

Neben der gegenüber nativer Maisstärke geringeren Hydrolysegeschwindigkeit ist ein weiterer Vorteil des Stärkeprodukts dessen höhere Temperaturstabilität. Dadurch wird eine Verarbeitung, z.B. Zumischen des langsam verdaulichen Stärkeprodukts als Ingredienz zu einem Lebensmittel bei Prozesstemperaturen, die für das Lebensmittel typisch sind, ermöglicht. In einer vorteilhaften Ausführung liegt die DSC-Schmelztemperatur Tp in °C der Kristallite des langsam verdaulichen Stärkeprodukts bei 70% Wassergehalt bei > 70, vorzugsweise > 80, noch bevorzugter > 90, am bevorzugtesten > 100. Bei tieferen Wassergehalten liegen die DSC-Schmelztemperaturen bei noch wesentlich höheren Werten, bei 10% Wassergehalt bsw. oberhalb von 240°C, sodass auch ein Toasten mit Expandierung bzw. Backen möglich ist, wobei das Stärkeprodukt als eigenständiges Lebensmittel in Form eines genussvollen Snack bsw. erhalten werden kann. Wichtig ist die Temperaturstabilität auch für die Anwendung des Stärkeproduktes als Ingredienz, wobei das Ingredienz verschiedenen thermischen Verarbeitungsschritten ausgesetzt wird.

Ein weiterer Vorteil des Stärkeprodukts besteht darin, dass der Anteil an Resistenter Stärke eingestellt werden kann. Wird das Stärkeprodukt in Form eines Ingredienz eingesetzt wird so neben der Herabsetzung der Hydrolysegeschwindigkeit bzw. des GI auch Anteil an Resistenter Stärke erhalten, wodurch sich die separate Zugabe von Fasern oder Resistenter Stärke erübrigt. In diesem Fall ist ein hoher resistenter Anteil des Stärkeprodukts von z.B. 20 - 30% vorteilhaft. Wird das Stärkeprodukt als Lebensmittel per se eingesetzt, werden eher tiefere resistente Anteil bevorzugt, z.B. 5 - 20%. Der Anteil an Resistenter Stärke des langsam verdaulichen Stärkeprodukts in Gew.% liegt im Bereich von 0 - 50, vorzugsweise 3 - 45, am bevorzugtesten 5 - 40.

### Anwendungen

Insgesamt ist etwa 0.1 - 1.0g, vorzugsweise 0.25 - 0.5g pro kg Körpergewicht des langsam verdaulichen Stärkeprodukts bei Ho = 70%/h (in vitro) ausreichend um (in vivo) eine während etwa 3 - 4 Stunden ausreichende kontinuierliche Zufuhr von Glucose für den Organismus zu gewährleisten. Dies entspricht einer typischen Zeit zwischen Mahlzeiten. Für eine längere kontinuierlichen Zufuhr von Glucose sind entsprechend grössere Mengen einzusetzen (bei entsprechend reduzierter Ho), bsw. für die Vermeidung von Unterzuckerung während der Nacht bei Diabetikern oder Kindern und insbesondere Kleinkindern, die infolge von Unterzuckerung aufwachen können.

In Form eines Pulvers kann das Stärkeprodukt als Ingredienz einer breiten Palette von Lebensmitteln zugemischt werden, wodurch die Hydrolysegeschwindigkeit bzw. der GI der Kombination vorteilhaft reduziert werden kann und insbesondere eine lang anhaltende und zeitlich konstante Glucose Freisetzung ermöglicht wird, sodass sowohl eine Unterzuckerung als auch eine Überzuckerung vermieden werden kann. Eine nicht einschränkend zu verstehende Aufzählung beinhaltet bsw. Cerealien, Müeslis, Snacks, Pommes Frittes, Chips, Pasta, Pizza, Saucen, Suppen, Cremes, Füllungen, Sirups, Puddings, Milchprodukte, Yoghurt, Getränke, Backwaren, Kekse, Brot, Kuchen, Konfekt, Puddings, Kinder- und Babynahrung, Diabetikemahrung, Energieriegel.

Weiter kann das Stärkeprodukt auch in Form einer Tablette konsumiert werden, wodurch die Vorteile des langsam verdaulichen Stärkeprodukts ausgeprägt und in komprimierter Form genutzt werden können. Dies ist bsw. dann sinnvoll, wenn keine Zeit für eine Mahlzeit zur Verfügung steht.

Eine weitere Konsumationsform besteht in einem Lebensmittel, das zur Hauptsache aus langsam verdaulichem Stärkeprodukt besteht wie bsw. Cereals, Kekse oder Snacks. Neben den bereits genannten Vorteilen gegenüber naiver Maisstärke ist dies ein weiterer wichtiger Vorteil, da die Einnahme von nativer Stärke in Form eines Slurrys oder in Form von Tabletten unangenehm ist. Für Diabetiker ist es ein deutlicher Gewinn von Lebensqualität, wenn die Regelung des Blutzuckerspiegels bsw. über Nacht mit dem Konsum bsw. eines genussvollen Snacks erreicht werden kann.

### Figuren

- Figur 1:: Hydrolysekurven von langsam verdaulichen Mais-Stärkeprodukten
- Figur 2:: Hydrolysekurven von langsam verdaulichen Kartoffel-Stärkeprodukten
- Figur 3:: Hydrolysekurven von langsam verdaulichen Erbsen-Stärkeprodukten
- Figur 4:: Einfluss der Partikelgrösse auf die Hydrolysekurven von langsam verdaulichen Erbsen- und Kartoffelstärke Produkten
- Figur 5:: Hydrolysekurven von langsam verdaulichen hochamylosehaltigen Mais-Stärkeprodukten
- Figur 6:: Korrelation zwischen der anfänglichen Hydrolysegeschwindigkeit Ho und dem Glyzemischen Index (GI)

### Beispiele

### Beispiele 1

Diese Beispiele illustrieren die Reduktion der anfänglichen Hydrolysegeschwindigkeit und die Einstellung von konstanter Hydrolysegeschwindigkeit für verschiedene Rezepturen sowie den Einfluss der Konditionierungsparameter. In einem Brabender Kneter mit einer 50ml Knetkammer wurde Stärke mit Zugabe von Wasser bei Drehzahlen im Bereich von 80 - 120upm zu einer thermoplastischen Masse verarbeitet. Die Knetkammer wurde auf 90°C thermostatisiert. In den meisten Fällen wurde die Stärke in pregelatinisierter Form eingesetzt, weil dadurch die Aufbereitungszeit verkürzt werden konnte. Vergleichende Versuche mit nativer Stärke benötigten eine längere Verarbeitungszeit, doch wurden bei ansonsten gleichen Parametern vergleichbare Resultate erhalten. Bei SCA aufweisenden Mischungen wurde die SCA (kurzkettige, grossteils kristalline Amylose mit einem mittleren Polymerisationsgrad von 24) im Verhältnis 1 : 2 mit Wasser gemischt und bei 160°C im Autoklaven während 5min in eine niederviskose Lösung überführt. Diese Lösung wurde dann mit einer Temperatur von rund 90°C der mindestens teilweise thermoplastischen Masse der Basisstärke zugeführt, welche eine Massentemperatur von 95 - 100°C aufwies. Nach einer Mischzeit von etwa 3min konnte eine homogene Mischung erhalten werden. Diese Mischung wurde in einer Plattenpresse bei Temperaturen von rund 100°C zu einem Film von 0.5mm Dicke gepresst und dann innerhalb von 10min auf Raumtemperatur abgekühlt. Von diesem Film wurde der Wassergehalt Wo bestimmt (Proben von ca. 300mg, Trocknen während 24h bei 85°C über Phosphorpentoxid) und wurden verschiedene Proben zugeschnitten, die für diverse Konditionierungen weiterverwendet wurden. Für diese Konditionierungen wurden die Probenstücke in Saran Film eingepackt um den Wassergehalt Wo konstant zu halten.

Die Resultate zu verschiedenen Rezepturen und Wärmebehandlungen sind in Tabelle 1 aufgeführt. Die Tabelle enthält die relevanten Hydrolyseparameter für Referenzproben von nativer Maisstärke, Amylase behandelter Maisstärke entsprechend WO 2004/066955 A2 (wobei langsam verdauliche Stärke entsprechend US 2003/0219520 A1 und US 2003/0215562 A1 damit vergleichbar ist), Resistenter Stärke (Novelose 330, National Starch), Weissbrot (Migros), Vollkornbrot ()Migros) und Roggenschrotbrot (Pumpernickel, Migros).

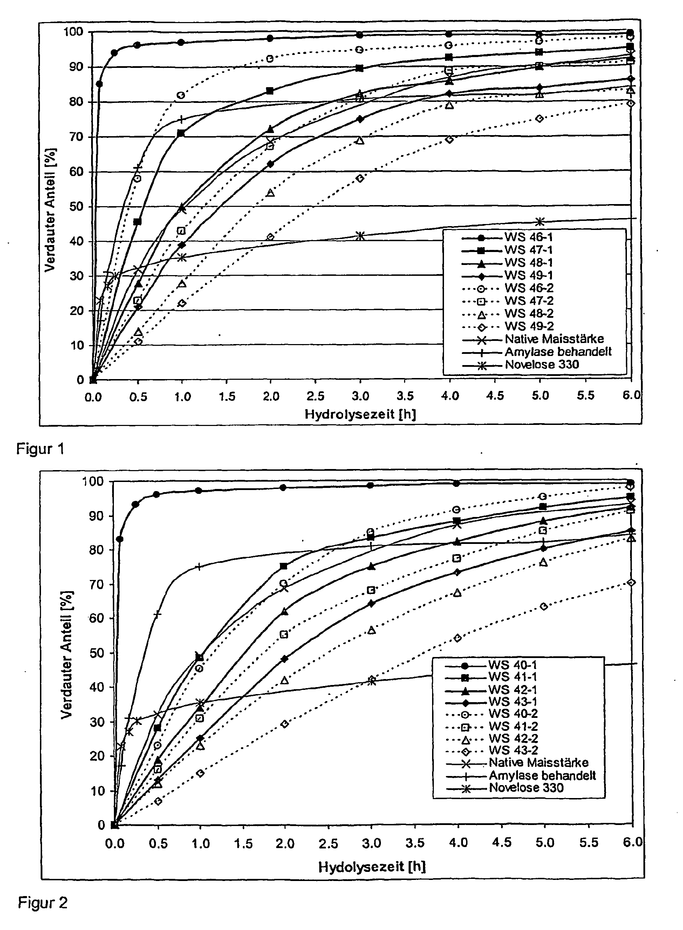

In Fig. 1 sind einige Resultate für Maisstärke graphisch dargestellt. Eingetragen sind auch die Referenzkurven für native Maisstärke, Amylase behandelte Stärke und Novelose 330. Die Kurve WS 46-1 entspricht praktisch vollständig amorpher Stärke, die ausgesprochen schnell verdaut wird. Alle weiteren WS Kurven haben eine anfänglichen Hydrolysegeschwindigkeit Ho von unterhalb 200%/h bis hin zu 43%/h. Deutlich kommt auch ein linearer Verlauf der Kurven zum Ausdruck, der sich bei WS 49-2 über gut 2.5h (in vitro) erstreckt, wobei dieser Zeitraum in vivo um ein Mehrfaches grösser ist. Generell kann Ho mit einer Zugabe von kurzkettiger Amylose (SCA) besonders stark reduziert werden und ist sogar eine massive Reduktion ohne spezifischen Wärmebehandlung zu erreichen. Im Falle einer Wärmebehandlung wurde gefunden, dass bei dem vorliegenden Wassergehalt von rund 30% die Wärmebehandlung von 1h bei 50°C praktisch dasselbe Resultat liefert wie die Wärmebehandlung von 24h bei 25°C. Gegenüber nativer Maisstärke kann gezeigt werden, dass sowohl ein ähnlicher Hydrolyseverlauf eingestellt werden kann, als auch ein deutlich verlangsamter Hydrolyseverlauf. Die resistente Stärke Novelose 330 zeigt ganz am Anfang eine sehr schnelle Hydrolyse, bezogen auf den verdaubaren Anteil an Novelose 330 wird ein erster Teil, rund die Hälfte des verdaubaren Anteils, praktisch gleich schnell verdaut wie Weissbrot. Die zweite Hälfte wird dann sehr langsam verdaut, zu langsam, um eine ausreichende Menge an Glucose über einen längeren Zeitraum freizusetzen. Daher ist Novelose 330 wie auch andere resistente Stärken für eine langsame Freisetzung von Glucose nicht geeignet. Die langsam verdaulichen Stärkeprodukte entsprechend WO 2004/066955 A2, US 2003/0219520 A1 und US 2003/0215562 A1 weisen grundsätzlich eine ähnliche Charakteristik auf wie Novelose 330, es liegt ein Anteil von vergleichsweise schnell verdaulicher Stärke und ein relativ hoher resistenter Anteil vor, jedoch zusätzlich auch ein Anteil an langsam verdaulicher Stärke, vergleiche die Kurve zu Amylase behandelter Maisstärke. Diese Charakteristik ist hinsichtlich einer kontrollierten Abgabe von Glucose offensichtlich weniger geeignet als native Maisstärke.

Die WS Kurven von Fig. 2 wurden mit Stärkeprodukten basierend auf Kartoffelstärke erhalten, wobei die Verhältnisse im Vergleich zu Fig. 1 sehr ähnlich sind, mit dem Unterschied, dass noch etwas tiefere Hydrolysegeschwindigkeiten und teilweise noch längere lineare Bereiche erhalten wurden.

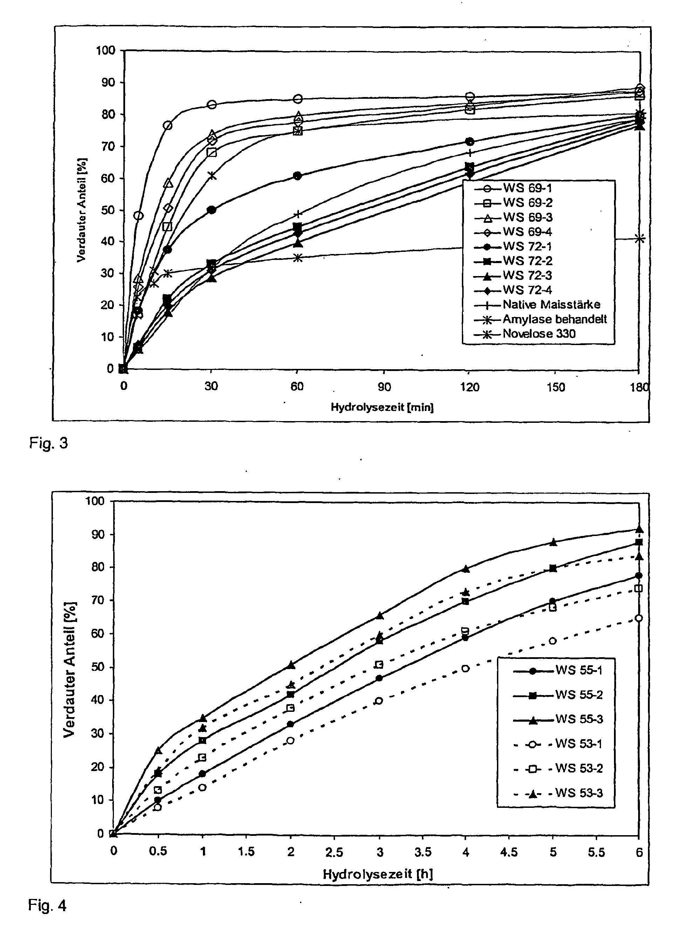

Die WS Kurven von Fig. 3 wurden mit Stärkeprodukten basierend auf Erbsenstärke mit rund 50% Amylose erhalten. Bei dem Wassergehalt von 29% wird die erstaunliche Wirkung beim Einsatz von kurzkettiger Amylose (SCA) deutlich. Während bei WS 69-2 ohne SCA nach einem Tag Lagerung bei 25°C eine Ho von 200%/h erhalten wurde, kann beim Einsatz von nur 5% SCA und der Konditionierung während 1h bei 70% eine anfängliche Hydrolysegeschwindigkeit Ho von 20%/h erhalten werden. Solche Werte sind auch ohne SCA möglich, doch werden hierzu deutlich längere Konditionierungen bei Wassergehalten oberhalb von 29% benötigt.

In Figur 4 wird der Einfluss der Partikelgrösse bei langsam verdaulichen Stärkeprodukten auf Basis von Erbenstärke mit 50% Amylosegehalt und von Kartoffelstärke gezeigt.

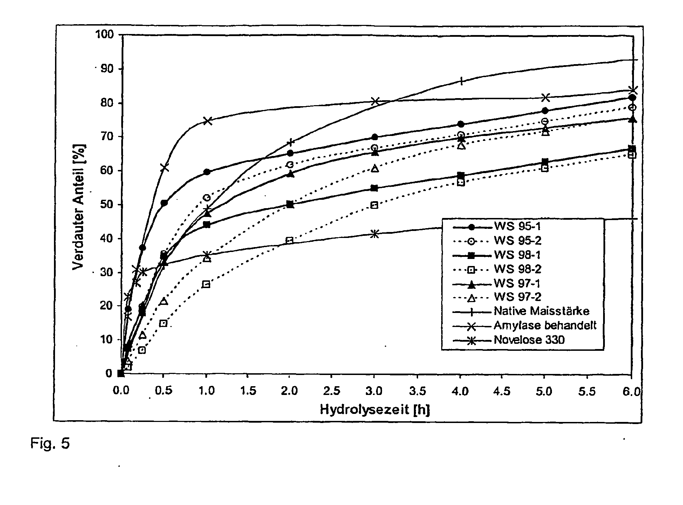

In Figur 5 sind schliesslich noch Resultate zu langsam verdaulichem Stärkeprodukt auf Basis von Maisstärke mit 70% Amylosegehalt aufgeführt. Auch auf Basis dieser Stärke können vorteilhafte Hydrolysecharakteristiken erhalten werden. Bei WS 95 und WS 97 war die Stärke zu etwa 75% gelatinisiert und nur minimal plastifiziert, bei WS 98 war die Gelatinisierung vollständig und wurde mehr plastifiziert.

### Beispiel 2

Dieses Beispiel illustriert die Anwendung des Stärkeprodukts als Ingredienz. Eine Referenz Rezeptur mit bezogen auf die Trockenmasse 70% Weizenmehl, 7% Butter, 15% Isomalt, 5% Fruchtzucker, 1% Salz, 0.8% Calciumphosphat, 0.4% Malz und 0.8% Backpulver wurde bei einem Wassergehalt von 28% zu einem Teig geknetet, woraus Kekse geformt wurden. Die Kekse wurden 12min bei 210°C gebacken. Die Hydrolysegeschwindigkeit Ho bezogen auf den Stärkeanteil wurde zu 900%/h bestimmt. Bei der Referenz Rezeptur wurde ein Teil des Weizenmehls mit einem Pulver entsprechend WS 42-2 ersetzt, sodass die Rezeptur 45% Weizenmehl und 25% WS 42-2 aufwies. Die auf den Stärke Anteil bezogene Hydrolysegeschwindigkeit Ho wurde zu 600%/h bestimmt. Bezogen auf den Stärke Anteil konnte der GI also von rund 88 auf 68, also vom high GI Bereich in den medium GI Bereich reduziert werden.

### Beispiel 3

Dieses Beispiel illustriert die Anwendung des Stärkeprodukts als Lebensmittel per se, insbesondere als Kartoffel-Snack. Gleiches Vorgehen wie in Beispiel 1, als Basisstärke wurde Kartoffelgranulat und Kartoffelflocken im Verhältnis 8 : 2 eingesetzt, 1.4% Salz wurde zugegeben, der Anteil SCA bezogen auf die Stärke insgesamt war 20% und Wo 29%. Die homogene Mischung wurde zu Filmen von 0.5mm Dicke gepresst und diese Filme wurden bei 60°C 1h bei konstantem Wo in Saran Folie eingepackt gelagert. Anschliessend wurden die Filme in Stücke von 1cmx1cm geschnitten und bei 75°C auf einen Wassergehalt von 10% getrocknet. Bei diesem Wassergehalt wurden die Stücke bei 220°C in einem Umluftofen während 1 min getoastet. Die Hydrolysemessung ergab eine Ho von 27%/h (dies entspricht etwa einem GI Wert von ca. 15 - 20) und dieser Wert blieb während rund 2h konstant. Daher weist das Produkt eine gegenüber nativer Maisstärke (Ho = 64%/h) deutlich verlangsamte Freisetzung von Glucose auf und eignet sich für eine nachhaltige Glucose Versorgung, insbesondere für Diabetiker. Der organoleptische Versuch ergab eine hohe Knusprigkeit und ein wohlgefälligen Geschmack. Daher eignet sich das Produkt bsw. als Snack für den Ersatz von organoleptisch unattraktiver nativer Maisstärke mit zusätzlich verbesserten Hydrolyseeigenschaften.

### Beispiel 4

Dieses Beispiel illustriert die Anwendung des Stärkeprodukts als Lebensmittel per se, insbesondere als Mais-Snack. Gleiches Vorgehen wie in Beispiel 3, als Basisstärke wurde Maismehl eingesetzt. Neben 1.4% Salz wurde noch 0.4% Malz und 7% Isomalt (ein low GI Zucker) zugesetzt. Der Anteil SCA betrug ebenfalls 20%. Die anfängliche Hydrolysegeschwindigkeit Ho des getoasteten Mais-Snacks lag bei 34% und blieb während rund 1.9h konstant. Auch hier wurde eine hohe Knusprigkeit festgestellt und der Geschmack erinnerte ausgeprägt an Corn Flakes. Daher eignet sich dieses Produkt in gleicher Weise wie das Produkt von Beispiel 3 für einen Snack mit einer langsamen und konstanten Freisetzung von Glucose.

### Beispiel 5

Dieses Beispiel illustriert die Anwendung des Stärkeprodukts per se, insbesondere als Konfekt bzw. Fruchtimitat. Gleiches Vorgehen wie in Beispiel 1, als Basisstärke wurde Tapioka Stärke und dünnkochende Maisstärke im Verhältnis 7 : 3 eingesetzt, der Anteil an SCA betrug 20%. Ausserdem wurde noch 10% Xylitol und 30% Glycerin zugesetzt, sowie 1.5% Zitronensäure und etwa 0.1 % Fruchtaroma. Der Wassergehalt Wo lag bei 25%. Die homogenisierte Masse wurde zu einem Film von 3mm Dicke gepresst und 3h bei 40°C gelagert (beim Einsatz von Weichmachern wie Glycerin wird zur Bestimmung der optimalen Temperatur Tk für die Netzwerkbildung der Anteil Weichmacher dividiert durch 3 als zusätzlicher Wassergehalt betrachtet, d.h. dieser Wassergehalt lag hier bei rund 25 + 30/3 = 35%). Der so konditionierte Film wurde in Stücke von 3mmx3mmx3mm geschnitten, die eine weiche Konsistenz aufwiesen und an getrocknete Fruchtstücke erinnerten. Diese Stücke wurden bezüglich der Hydrolysegeschwindigkeit analysiert, wobei eine anfängliche Hydrolysegeschwindigkeit Ho von 37%/h erhalten wurde und diese während 2.5h konstant blieb. Daher eigenen sich auch solche Produkte für die kontrollierte Freisetzung von Glucose. Sie können per se konsumiert werden oder diversen Lebensmitteln wie bsw. Müeslis oder Riegeln zugegeben werden.

### Messmethoden

Hydrolyse Messungen: Die Hydrolyse Messungen wurde in Anlehnung an die AOAC Methode 2002.02 mittels des Resistant Starch Assay Kit von Megazyme durchgeführt. Zur Hydrolyse wird dabei alpha Amylase und Amyloglucosidase eingesetzt. Diese Methode und der Kit von Megazyme sind für die standardisierte Bestimmung des Anteils an Resistenter Stärke (RS) von Stärke basierten Produkten ausgearbeitet worden. Im Unterschied dazu wurde hier die Hydrolyse nach bestimmten Zeiten, z.B. nach 0.5, 1, 2, 3h et. gestoppt, um den Anteil der verdauten Stärke zu diesem Zeitpunkt zu erhalten. Für die Bestimmung des RS-Anteils wurde der Norm entsprechend während 16h hydrolysiert. Pro Hydrolysezeit wurde jeweils ein Glasröhrchen mit Substrat verwendet. Es hat sich gezeigt, dass diese Vorgehensweise gegenüber der Aliquot Entnahme genauer ist. Nach dem Stoppen der Hydrolyse wurde der Rückstand, d.h. die unverdaute Stärke durch Zentrifugation bei 3000g sedimentiert, getrocknet und gewogen (M1). Aus der Differenz zum trockenen Einwaagegewicht (M0) wurde der Anteil der verdauten Stärke als (M1-M0)/M0 erhalten. Die so erhaltenen Resultate waren, identisch mit der Bestimmung der unverdauten Stärke mittels GOPOD. (Glucose Oxidase-Peroxidase-Aminoantipyrin), wie vergleichende Versuche ergeben haben. Bei Substraten, die neben Stärke und Wasser noch andere Bestandteile aufweisen, kann der lösliche Anteil der nicht-Stärke Bestandteile durch Referenzversuche ohne den Einsatz von Amylasen ermittelt werden und der nicht-lösliche Anteil aus der Differenz des RS Anteils und M1 nach 16h erhalten werden. Somit kann die Hydrolyse der Stärke Fraktion von den anderen Vorgängen separiert werden.

Die beschriebene Methode zur in vitro Analyse der Hydrolysierungskinetik kann mit bekannten GI Werten korreliert werden. Dabei wurde gefunden, dass eine gute Korrelation zwischen der anfänglichen Hydrolysegeschwindigkeit Ho und den entsprechenden GI Werten besteht. Dies ist zu erwarten, da in den allermeisten Fällen der Grossteil der Stärke mit einer Geschwindigkeit Ho verdaut wird. Der Zusammenhang zwischen Ho und GI (Glucose = 100) ist in Fig. 6 dargestellt. Der sich aus der Figur für eine bestimmte Ho ergebende GI Wert ist als Richtwert zu betrachten, weil in vivo gemessene GI Werte meist eine grosse Streuung aufweisen. Hingegen können in vitro Hydrolysegeschwindigkeiten sehr viel einfacher und genauer bestimmt werden, weshalb in dieser Anmeldung auf diese Werte abgestützt wird.

DSC Messungen: Die Differential Scanning Calorimetry (DSC) Messungen wurden mit einem Perkin-Elmer DSC-7 durchgeführt. Das Gerät wurde mit Indium kalibriert. Für die Proben wurden geschlossene rostfreie Stahltiegel verwendet. Das Probengewicht war jeweils etwa 60mg und der Wassergehalt der Proben 70%, die Heizrate war 10°C/min. Es wurde jeweils die Peak Temperatur Tp der Schmelz-Endotherme des kristallinen Anteils der Stärke Proben bestimmt.

Quellung: Die Quellung von Proben von langsam verdaulicher Stärke wurde mittels Plättchen von 1cmx1cm und 0.5mm Dicke durchgeführt. Dabei wurden die Plättchen auf einen Wassergehalt von 10% getrocknet (Gewicht G0) und dann 24h bei Raumtemperatur in deionisiertem Wasser gelagert (Gewicht G1). Der Quellgrad wurde als das Gewicht der gequollenen Probe dividiert durch das Gewicht der trockenen Probe (0% Wasser) erhalten als Q = G1/(0.9*G0).

## Patentansprüche

1. Langsam verdauliches Stärkeprodukt, das ein quellbares Netzwerk aufweist, dessen Verknüpfungspunkte durch Kristallite gebildet sind, das durch molekulardisperses Mischen einer Basisstärke mit einer kurzkettigen Amylose mit einem Polymerisationsgrad < 100 und anschliessendes Konditionieren hergestellt wird, und das zerkleinert auf eine Partikelgrösse ≤ 0.5mm eine nach der AOAC-Methode 2000.02 bestimmte anfängliche Hydrolysegeschwindigkeit Ho von < 300%/h aufweist.

2. Stärkeprodukt nach Anspruch 1, **dadurch gekennzeichnet, dass** das Stärkeprodukt während mindestens 0.25h eine nach der AOAC-Methode 2000.02 bestimmte konstante Hydrolysegeschwindigkeit (Hc) aufweist, die bei einer Partikelgrösse ≤ 0.5mm Hc < 300%/h beträgt.

3. Stärkeprodukt nach einem der vorangehenden Ansprüche, **dadurch gekennzeichnet, dass** ein Anteil des Stärkeprodukts von > 20% mit konstanter oder nahezu konstanter Hydrolysegeschwindigkeit (Hc) hydrolysiert wird.

4. Stärkeprodukt nach einem der vorangehenden Ansprüche, **dadurch gekennzeichnet, dass** das Stärkeprodukt nach Quellung in deionisiertem Wasser bei Raumtemperatur einen Quellgrad (Q) im Bereich 1.1 - 4 aufweist.

5. Stärkeprodukt nach einem der vorangehenden Ansprüche, **dadurch gekennzeichnet, dass** die DSC-Schmelztemperatur (Tp) der Kristallite > 70°C beträgt.

6. Stärkeprodukt nach einem der vorangehenden Ansprüche, **dadurch gekennzeichnet, dass** das Stärkeprodukt einen Anteil an Resistenter Stärke im Bereich von 0 - 50% aufweist.

7. Stärkeprodukt nach einem der vorangehenden Ansprüche, **dadurch gekennzeichnet, dass** das Stärkeprodukt 1 - 95% kurzkettige Amylose mit einem Polymerisationsgrad PG < 100 aufweist und das Stärkeprodukt Netzwerk-knüpfende Mischkristallite aufweist, die aus der kurzkettigen Amylose und der Basisstärke bestehen.

8. Stärkeprodukt nach einem der vorangehenden Ansprüche, **dadurch gekennzeichnet, dass** das Stärkeprodukt mindestens einen Zusatzstoff aufweist, insbesondere einen Anteil an löslichen Fasern aufweist.

9. Verfahren zur Herstellung eines langsam verdaulichen Stärkeprodukts, bei dem eine Stärke mindestens teilweise gelatinisiert oder mindestens teilweise plastifiziert und mit einer kurzkettigen Amylose mit einem Polymerisationsgrad PG < 100 molekulardispers gemischt wird, woraufhin die so aufbereitete Stärke bzw. Stärke-Mischung einer Konditionierung unterzogen wird, wobei ein Stärke Netzwerk eingestellt wird, so dass das resultierende Stärkeprodukt bei einer Partikelgrösse ≤ 0.5mm eine nach der AOAC-Methode 2000.02 bestimmte anfängliche Hydrolysegeschwindigkeit (Ho) ≤ 300%/h aufweist.

10. Verwendung eines Stärkeprodukts nach einem der vorangehenden Ansprüche als Ingredient, das einem Lebensmittel zugemischt wird, insbesondere einem Riegel, Cerealien, Müesli, Snack, Pommes Frittes, Chips, Pasta, Pizza, Saucen, Suppen, Cremes, Füllungen, Sirups, Puddings, Milchprodukten, Yoghurt, Getränken, Backwaren, Keksen, Brot, Kuchen, Konfekt, Puddings, Kinder- und Babynahrung, Diabetikemahrung, und/oder als Tablette vorliegt und/oder als Lebensmittel per se vorliegt, insbesondere als Cereal oder Snack.
**Tabelle 1**
| Nr | Stärke | SCA | Wo | Kond. | d | Q | Ho | Hc | tc | SD | Tp | RS |
|---|---|---|---|---|---|---|---|---|---|---|---|---|
| | | [%] | [%] | | [mm] | | [%/h] | [%/h] | [h] | [%] | [°C] | [%] |
| | | | | | | | | | | | | |
| WS 46-1 | Mais | 0 | 30 | keine | 0.5 | >10 | 1000 | 1000 | 0.08 | 0 | * | 1 |
| WS 47-1 | Mais | 10 | 30 | keine | 0.5 | 2.6 | 90 | 90 | 0.6 | 97 | 98 | 3 |
| WS 48-1 | Mais | 20 | 30 | keine | 0.5 | 2.2 | 55 | 55 | 0.7 | 94 | 105 | 6 |
| WS 49-1 | Mais | 30 | 30 | keine | 0.5 | 1.9 | 43 | 43 | 0.7 | 93 | 114 | 7 |
| WS 46-2 | Mais | 0 | 30 | 1h bei 50°C | 0.5 | 2.6 | 125 | 125 | 0.5 | 96 | 77 | 4 |
| WS 47-2 | Mais | 10 | 30 | 1h bei 50°C | 0.5 | 1.9 | 47 | 47 | 0.9 | 95 | 103 | 5 |
| WS 48-2 | Mais | 20 | 30 | 1h bei 50°C | 0.5 | 1.4 | 28 | 28 | 1.7 | 93 | 111 | 7 |
| WS 49-2 | Mais | 30 | 30 | 1 h bei 50°C | 0.5 | 1.3 | 22 | 22 | 2.5 | 92 | 117 | 8 |
| WS 40-1 | Kartoffel | 0 | 30 | keine | 0.5 | >10 | 1000 | 1000 | 0.08 | 0 | * | 1 |
| WS 41-1 | Kartoffel | 10 | 30 | keine | 0.5 | 2.5 | 58 | 58 | 0.6 | 96 | 94 | 4 |
| WS 42-1 | Kartoffel | 20 | 30 | keine | 0.5 | 1.7 | 33 | 33 | 1.7 | 95 | 104 | 5 |
| WS 43-1 | Kartoffel | 30 | 30 | keine | 0.5 | 1.4 | 25 | 25 | 2.2 | 93 | 116 | 7 |
| WS 40-2 | Kartoffel | 0 | 30 | 1h bei 50°C | 0.5 | 1.8 | 48 | 48 | 0.8 | 96 | 75 | 4 |
| WS 41-2 | Kartoffel | 10 | 30 | 1h bei 50°C | 0.5 | 1.7 | 30 | 30 | 1.4 | 95 | 101 | 5 |
| WS 42-2 | Kartoffel | 20 | 30 | 1h bei 50°C | 0.5 | 1.4 | 23 | 23 | 2 | 93 | 110 | 7 |
| WS 43-2 | Kartoffel | 30 | 30 | 1h bei 50°C | 0.5 | 1.3 | 15 | 15 | 3.5 | 92 | 115 | 8 |
| WS 55-1 | Kartoffel | 20 | 36 | 1h bei 50°C | 0.5 | 1.3 | 16 | 14 | 3.5 | 91 | 109 | 9 |
| WS 55-2 | Kartoffel | 20 | 36 | 1 h bei 50°C | 0.35 | 1.7 | 36 | 15 | 3 | 91 | 109 | 9 |
| WS 55-3 | Kartoffel | 20 | 36 | 1h bei 50°C | 0.2 | 1.9 | 54 | 16 | 3 | 93 | 109 | 7 |
| WS 53-1 | HA Erbse | 20 | 25 | 1h bei 50°C | 0.5 | 1.2 | 14 | 12 | 4 | 83 | 114 | 17 |
| WS 53-2 | HA Erbse | 20 | 25 | 1h bei 50°C | 0.35 | 1.3 | 26 | 13 | 2.5 | 84 | 114 | 16 |
| WS 53-3 | HA Erbse | 20 | 25 | 1h bei 50°C | 0.2 | 1.5 | 38 | 14 | 3 | 86 | 114 | 14 |
| WS 69-1 | HA Erbse | 0 | 29 | keine | 0.3 | 6 | 600 | 600 | 0.08 | 10 | 72 | 9 |
| WS 69-2 | HA Erbse | 0 | 29 | 1d bei 25°C | 0.3 | 3.1 | 200 | 200 | 0.3 | 89 | 77 | 11 |
| WS 69-3 | HA Erbse | 0 | 29 | 1h bei 70°C | 0.3 | 5 | 360 | 360 | 0.2 | 30 | 85 | 12 |
| WS 69-4 | HA Erbse | 0 | 29 | 1h bei 90°C | 0.3 | 4.5 | 330 | 330 | 0.2 | 35 | 105 | 12 |
| WS 72-1 | HA Erbse | 5 | 29 | keine | 0.3 | 2.9 | 200 | 12 | 2 | 90 | 98 | 10 |
| WS 72-2 | HA Erbse | 5 | 29 | 1d bei 25°C | 0.3 | 2.3 | 90 | 20 | 2.5 | 89 | 100 | 11 |
| WS 72-3 | HA Erbse | 5 | 29 | 1 h bei 70°C | 0.3 | 2.2 | 80 | 20 | 2.5 | 89 | 104 | 11 |
| WS 72-4 | HA Erbse | 5 | 29 | 1h bei 90°C | 0.3 | 2 | 70 | 22 | 2.5 | 89 | 111 | 11 |
| WS 95-1 | HA Mais | 0 | 24 | keine | 0.15 | 1.8 | 200 | | | 89 | 110 | 11 |
| WS 95-2 | HA Mais | 0 | 24 | 1h bei 70°C | 0.15 | 1.5 | 70 | | | 87 | 118 | 13 |
| WS 97-1 | HA Mais | 10 | 35 | keine | 0.15 | 1.5 | 68 | | | 86 | 118 | 14 |
| WS 97-2 | HA Mais | 10 | 35 | 1h bei 50°C | 0.15 | 1.4 | 46 | | | 85 | 121 | 15 |
| WS 98-1 | HA Mais | 0 | 37 | keine | 0.15 | 1.5 | 70 | | | 84 | 115 | 16 |
| WS 98-2 | HA Mais | 0 | 37 | 1h bei 40°C | 0.15 | 1.3 | 32 | | | 82 | 118 | 18 |
| Native Mais Stärke | | | | | | | 64 | 64 | 0.6 | 97 | 72 | 3 |
| Amylase behandelte Maisstärke | | | | | | | 200 | 200 | 0.25 | 85 | 92 | 11 |
| Novelose 330 | | | | | | | 270 | 270 | 5 | 20 | 131 | 52 |
| Baguette weiss | | | | | | | 1000 | | | 0 | * | 1 |
| Vollkombrot | | | | | | | 530 | | | 10 | * | 9 |
| Roggenschrotbrot | | | | | | | 220 | | | 75 | * | 17 |
| HA Erbse | Hochamylosehaltige Erbsenstärke | | | | Ho | Anfängliche Hydrolysegeschwindigkeit | | | | | | |
| HA Mais | Hochamylosehaltige Maisstärke | | | | Hc | Konstante Hydrolysegeschwindigkeit | | | | | | |
| SCA | Short Chain Amylose, DP = 24 | | | | tc | Zeit der konstanten Hydrolyse | | | | | | |
| Wo | Wassergehalt bei Kond./vor Trocknung | | | | SD | Langsam verdauliche Stärke | | | | | | |
| Kond. | Konditionierung | | | | Tp | DSC-Schmelztemperatur | | | | | | |
| d | Partikelgrösse | | | | RS | Anteil an Resistenter Stärke/Fiber | | | | | | |
| Q | Quellgrad | | | | * | keine Kristallite | | | | | | |

## Claims

1. A slowly digestible starch product, which comprises a swellable network whose linkage points are formed by crystallites, which is produced by a molecular-dispersed mixing of a base starch with a short-chain amylose with a polymerization degree < 100 and subsequent conditioning, and which comminuted to a particle size of ≤0.5 mm has an initial hydrolysis speed Ho of < 300%/h as determined according to the AOAC method 2000.02.

2. A starch product according to claim 1, **characterized in that** the starch product has a constant hydrolysis speed (Hc) during at least 0.25h as determined according to the AOAC method 2000.02, which is Hc < 300%/h at a particle size of ≤0.5 mm.

3. A starch product according to one of the preceding claims, **characterized in that** a percentage of the starch product of > 20% is hydrolyzed with constant or near constant hydrolysis speed (Hc).

4. A starch product according to one of the preceding claims, **characterized in that** the starch product, after swelling in de-ionized water, has a degree of swelling (Q) in the range of 1.1 to 4 at room temperature.

5. A starch product according to one of the preceding claims, **characterized in that** the DSC melting temperature (Tp) of the crystallites is >70°C.

6. A starch product according to one of the preceding claims, **characterized in that** the starch product has a percentage of resistant starch in the range of 0 to 50%.

7. A starch product according to one of the preceding claims, **characterized in that** the starch product has 1 to 95% of short-chain amylose with a degree of polymerization PG < 100 and the starch product comprises network-linking mixed crystallites which consist of the short-chain amylose and the base starch.

8. A starch product according to one of the preceding claims, **characterized in that** the starch product comprises at least one additive, especially a percentage of soluble fibers.

9. A method for producing a slowly digestible starch product in which a starch is gelatinized at least partly or is at least partly plasticized and is mixed with a short-chain amylose with a degree of polymerization PG of < 100 in a molecular-disperse manner, whereupon the thus prepared starch or starch mixture is subject to conditioning, with a starch network being set, so that the resulting starch product, at a particle size of ≤0.5 mm, has an initial hydrolysis speed (Ho) of ≤300%/h as determined according to the AOAC method 2000.02.

10. The use of a starch product according to one of the preceding claims as an ingredient which is admixed to a foodstuff, especially a bar, cereals, muesli, snacks, French fries, crisps, pasta, pizza, sauces, soups, creams, fillings, syrups, puddings, milk products, yoghurts, beverages, baked goods, biscuits, bread, cakes, confectionary, puddings, children and baby food, food for diabetics, and/or is present as a tablet and/or is present as a foodstuff per se, especially as a cereal or snack.

## Revendications

1. Produit amylacé à digestion lente, contenant un réseau capable de gonflement dont les points de liaison sont formés par des cristallites, obtenu par mélange en dispersion moléculaire d'un amidon de base avec une amylose à chaîne courte ayant un taux de polymérisation inférieur à 100 puis conditionnement, et qui présente, broyé en particules d'une taille ≤ 0,5 mm, une vitesse d'hydrolyse Ho initiale, déterminée selon la méthode AOAC 2000.02, inférieure à 300 %/h.

2. Produit amylacé selon la revendication 1, **caractérisé en ce que** le produit amylacé présente pendant au moins 0,25 h une vitesse d'hydrolyse initiale (Hc), déterminée selon la méthode AOAC 2000.02, qui est inférieure à 300 %/h pour une taille de particules ≤ 0,5 mm.

3. Produit amylacé selon l'une des revendications précédentes, **caractérisé en ce qu'**une partie du produit amylacée supérieure à 20 % est hydrolysée à une vitesse d'hydrolyse (Hc) constante ou quasiment constante.

4. Produit amylacé selon l'une des revendications précédentes, **caractérisé en ce que** le produit amylacé présente après gonflement dans l'eau désionisée à température ambiante un taux de gonflement (Q) compris entre 1,1 et 4.

5. Produit amylacé selon l'une des revendications précédentes, **caractérisé en ce que** la température de fusion DSC (Tp) des cristallites est supérieure à 70%.

6. Produit amylacé selon l'une des revendications précédentes, **caractérise en ce que** le produit amylacé contient une proportion d'amidon résistant comprise entre 0 et 50 %.

7. Produit amylacé selon l'une des revendications précédentes, **caractérisé en ce que** le produit amylacé contient 1 à 95 % d'amylose à chaîne courte ayant un taux de polymérisation PG inférieur à 100 et le produit amylacé comporte des cristallites mixtes liant le réseau qui se composent de l'amylose à chaîne courte et de l'amidon de base.

8. Produit amylacé selon l'une des revendications précédentes, **caractérisé en ce que** le produit amylacé contient au moins un additif, en particulier une proportion de fibres solubles.

9. Procédé pour la fabrication d'un produit amylacé à digestion lente, dans lequel un amidon est au moins partiellement gélifié et au moins partiellement plastifié et mélangé en dispersion moléculaire avec une amylose à chaîne courte ayant un taux de polymérisation PG inférieur à 100, après quoi l'amidon ou le mélange d'amidons ainsi préparé est soumis à un conditionnement, en ajustant un réseau d'amidon tel que le produit amylacé en résultant présente, pour une taille de particule ≤ 0,5 mm, une certaine vitesse d'hydrolyse initiale (Ho), déterminée selon la méthode AOAC 2000.02, qui est inférieure ou égale à 300 %/h.

10. Utilisation d'un produit amylacé selon l'une des revendications précédentes comme ingrédient qui est mélangé à un produit alimentaire, en particulier à une barre, à des céréales, des müeslis, des amuse-gueule, des frites, des chips, des pâtes, des pizzas, des sauces, des soupes, des crèmes, des farces, des sirops, des flans, des produits laitiers, des yaourts, des boissons, des pâtisseries, des biscuits, des pains, des gâteaux, des confiseries, des puddings, des aliments pour enfants ou nourrissons, des aliments pour diabétiques et/ou se présente comme un comprimé et/ou se présente comme un produit alimentaire en soi, en particulier comme des céréales ou des amuse-gueule.
